# EUROPEAN PATENT APPLICATION

(11) **EP 4 227 708 A1**
(43) Date of publication of application: **16.08.2023**
(21) Application number: 23156272.9
(22) Date of filing: 13.02.2023
(51) Int. Cl.: G01S 7/48, G01S 7/51, G01S 17/42, G01S 17/86, G01S 17/89, G06F 3/01, G01S 7/497

(54) **AUGMENTED REALITY ALIGNMENT AND VISUALIZATION OF A POINT CLOUD**

(30) Priority: 14.02.2022 US 202263309852 P
(71) Applicant: Faro Technologies, Inc., Lake Mary, FL 32746-6204 (US)
(72) Inventor: CHAN, John, Québec, H3Z1T3 (CA); KORGEL, Daniel, 70825 Korntal-Münchingen (DE); WOSTAL, Angelo, 70825 Korntal-Münchingen (DE); MÜLLER, Michael, 70825 Korntal-Münchingen (DE); HAEDICKE, Udo, 70825 Korntal-Münchingen (DE)
(74) Representative: McNamara, Kathryn

(57) **Abstract**

An example method includes generating a graphical representation of a point cloud of an environment overlaid on a video stream of the environment. The method further includes receiving a first selection of a first point pair, the first point pair including a first virtual point of the point cloud and a first real point of the environment, the first real point corresponding to the first virtual point. The method further includes receiving a second selection of a second point pair, the second point pair including a second virtual point of the point cloud and a second real point of the environment, the second real point corresponding to the second virtual point. The method further includes aligning the point cloud to the environment based at least in part on the first point pair and the second point pair and updating the graphical representation based at least in part on the aligning.

## Description

### CROSS-REFERENCE TO RELATED APPLICATIONS

The present application is a nonprovisional application, and claims the benefit of, United States Provisional Application Serial No. 63/309,852 filed on February 14, 2022, the contents of which is incorporated by reference in its entirety.

### BACKGROUND

The subject matter disclosed herein relates to use of a three-dimensional (3D) laser scanner time-of-flight (TOF) coordinate measurement device. A 3D laser scanner of this type steers a beam of light to a non-cooperative target such as a diffusely scattering surface of an object. A distance meter in the device measures a distance to the object, and angular encoders measure the angles of rotation of two axles in the device. The measured distance and two angles enable a processor in the device to determine the 3D coordinates of the target.

A TOF laser scanner is a scanner in which the distance to a target point is determined based on the speed of light in air between the scanner and a target point. Laser scanners are typically used for scanning closed or open spaces such as interior areas of buildings, industrial installations and tunnels. They may also be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., an azimuth and a zenith angle), and optionally a gray-scale value. This raw scan data is collected, stored and sent to a processor or processors to generate a 3D image representing the scanned area or object.

Generating an image requires at least three values for each data point. These three values may include the distance and two angles, or may be transformed values, such as the x, y, z coordinates. In an embodiment, an image is also based on a fourth gray-scale value, which is a value related to irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Many contemporary laser scanners include a camera mounted on the laser scanner for gathering camera digital images of the environment and for presenting the camera digital images to an operator of the laser scanner. By viewing the camera images, the operator of the scanner can determine the field of view of the measured volume and adjust settings on the laser scanner to measure over a larger or smaller region of space. In addition, the camera digital images may be transmitted to a processor to add color to the scanner image. To generate a color scanner image, at least three positional coordinates (such as x, y, z) and three color values (such as red, green, blue "RGB") are collected for each data point.

One application where 3D scanners are used is to scan an environment.

Accordingly, while existing 3D scanners are suitable for their intended purposes, what is needed is a 3D scanner having certain features of embodiments disclosed herein.

### BRIEF DESCRIPTION

In one exemplary embodiment, a method is provided. The method includes generating, on a display of a processing system, a graphical representation of a point cloud of an environment overlaid on a video stream of the environment. The method further includes receiving a first selection of a first point pair, the first point pair including a first virtual point of the point cloud and a first real point of the environment, the first real point corresponding to the first virtual point. The method further includes receiving a second selection of a second point pair, the second point pair including a second virtual point of the point cloud and a second real point of the environment, the second real point corresponding to the second virtual point. The method further includes aligning the point cloud to the environment based at least in part on the first point pair and the second point pair. The method further includes updating the graphical representation of the point cloud overlaid on the video stream based at least in part on the aligning.

In addition to one or more of the features described herein, or as an alternative, further embodiments of the method may include that the point cloud is based on data captured by a three-dimensional (3D) coordinate measurement device.

In addition to one or more of the features described herein, or as an alternative, further embodiments of the method may include that the 3D coordinate measurement device is a laser scanner.

In addition to one or more of the features described herein, or as an alternative, further embodiments of the method may include tracking a movement of the processing system as the processing system moves relative to the environment; and further updating the graphical representation based at least in part on the movement of the processing system.

In addition to one or more of the features described herein, or as an alternative, further embodiments of the method may include adjusting a property of the graphical representation of the point cloud overlaid on the video stream.

In addition to one or more of the features described herein, or as an alternative, further embodiments of the method may include that the property includes at least one of a point size of points of the point cloud or a transparency of the point cloud.

In addition to one or more of the features described herein, or as an alternative, further embodiments of the method may include that the aligning is based at least in part on a distance between the first virtual point and the first real point.

In addition to one or more of the features described herein, or as an alternative, further embodiments of the method may include that the aligning is based at least in part on a distance between the second virtual point and the second real point.

In addition to one or more of the features described herein, or as an alternative, further embodiments of the method may include that the aligning is based at least in part on a first distance between the first virtual point and the first real point and based at least in part on a second distance between the second virtual point and the second real point.

In addition to one or more of the features described herein, or as an alternative, further embodiments of the method may include that the first distance is a first Euclidean distance, and wherein the second distance is a second Euclidean distance.

In addition to one or more of the features described herein, or as an alternative, further embodiments of the method may include that the aligning is based at least in part on an average of the first distance and the second distance.

In addition to one or more of the features described herein, or as an alternative, further embodiments of the method may include receiving a third selection of a third point pair, the third point pair including a third virtual point of the point cloud and a third real point of the environment, the third real point corresponding to the third virtual point, and wherein the aligning is based at least in part on the first point pair, the second point pair, and the third point pair.

In another exemplary embodiment a method includes generating, on a display of a processing system, a graphical representation of a point cloud of an environment overlaid on a video stream of the environment. The method further includes aligning the point cloud to the environment based at least in part on a point cloud movement instruction, wherein the point cloud movement instruction is an instruction to move the point cloud along a plane or an instruction to rotate the point cloud about an axis orthogonal to the plane. The method further includes updating the graphical representation of the point cloud overlaid on the video stream based at least in part on the aligning.

In addition to one or more of the features described herein, or as an alternative, further embodiments of the method may include that the point cloud movement instruction is a gesture.

In addition to one or more of the features described herein, or as an alternative, further embodiments of the method may include that the point cloud movement instruction is a touch input on the display of the processing system.

In another exemplary embodiment a method includes generating, on a display of a processing system, a graphical representation of a point cloud of an environment overlaid on a video stream of the environment. The method further includes performing a first alignment to align the point cloud to the environment based at least in part on a first point pair and a second point pair. The method further includes performing a second alignment to further align the point cloud to the environment based at least in part on a point cloud movement instruction. The method further includes updating the graphical representation of the point cloud overlaid on the video stream based at least in part on the first alignment and the second alignment.

In addition to one or more of the features described herein, or as an alternative, further embodiments of the method may include that the point cloud movement instruction is an instruction to move the point cloud along a plane or an instruction to rotate the point cloud about an axis orthogonal to the plane.

In addition to one or more of the features described herein, or as an alternative, further embodiments of the method may include that the first point pair includes a first virtual point of the point cloud and a first real point of the environment, the first real point corresponding to the first virtual point.

In addition to one or more of the features described herein, or as an alternative, further embodiments of the method may include that the second point pair includes a second virtual point of the point cloud and a second real point of the environment, the second real point corresponding to the second virtual point.

In another exemplary embodiment a method includes generating, on a display of a processing system, a graphical representation of a point cloud of an environment overlaid on a video stream of the environment. The method further includes performing a first alignment to align the point cloud to the environment based at least in part on a point cloud movement instruction. The method further includes performing a second alignment to further align the point cloud to the environment based at least in part on a first point pair and a second point pair. The method further includes updating the graphical representation of the point cloud overlaid on the video stream based at least in part on the first alignment and the second alignment.

In addition to one or more of the features described herein, or as an alternative, further embodiments of the method may include that the point cloud movement instruction is an instruction to move the point cloud along a plane or an instruction to rotate the point cloud about an axis orthogonal to the plane.

In addition to one or more of the features described herein, or as an alternative, further embodiments of the method may include that the first point pair includes a first virtual point of the point cloud and a first real point of the environment, the first real point corresponding to the first virtual point.

In addition to one or more of the features described herein, or as an alternative, further embodiments of the method may include that the second point pair includes a second virtual point of the point cloud and a second real point of the environment, the second real point corresponding to the second virtual point.

The above features and advantages, and other features and advantages, of the disclosure are readily apparent from the following detailed description when taken in connection with the accompanying drawings.

### BRIEF DESCRIPTION OF DRAWINGS

The patent or application file contains at least one drawing executed in color. Copies of this patent or patent application publication with color drawing(s) will be provided by the Office upon request and payment of the necessary fee.

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a laser scanner according to one or more embodiments described herein;
FIG. 2 is a side view of the laser scanner illustrating a method of measurement according to one or more embodiments described herein;
FIG. 3 is a schematic illustration of the optical, mechanical, and electrical components of the laser scanner according to one or more embodiments described herein;
FIG. 4 is a schematic illustration of the laser scanner of FIG. 1 according to one or more embodiments described herein;
FIG. 5 is a schematic illustration of a processing system for aligning and visualizing a point cloud according to one or more embodiments described herein;
FIG. 6 is a flow diagram of a method for aligning and visualizing a point cloud according to one or more embodiments described herein;
FIG. 7 is a flow diagram of a method for aligning and visualizing a point cloud according to one or more embodiments described herein;
FIG. 8 is a flow diagram of a method for aligning and visualizing a point cloud according to one or more embodiments described herein;
FIG. 9 is a flow diagram of a method for aligning and visualizing a point cloud according to one or more embodiments described herein;
FIG. 10 is a flow diagram of a method for aligning and visualizing a point cloud according to one or more embodiments described herein;
FIG. 11A-11J depict screenshots of graphical representations of a video stream of an environment according to one or more embodiments described herein; and
FIG. 12 is a schematic illustration of a processing system for implementing the presently described techniques according to one or more embodiments described herein.

The detailed description explains embodiments of the disclosure, together with advantages and features, by way of example with reference to the drawings.

### DETAILED DESCRIPTION

Embodiments described herein provide for aligning and visualizing a point cloud. Particularly, one or more embodiments described herein relate to performing one or more alignments to align a point cloud with a environment that the point cloud represents.

Three-dimensional (3D) coordinate measurement devices, such as laser scanners, can be used to captured 3D data about an environment. The 3D data can be presented on a device, such as a smartphone, tablet, heads-up display, etc., as a graphical representation. In some cases, the graphical representation of the point cloud can be overlaid on a video stream of the environment that the point cloud represents. In such cases, the point cloud may not properly align to the environment. It is desirable to align the graphical representation of the point cloud with the environment.

Conventional techniques for aligning the graphical representation of the point cloud with the environment are often insufficient. For example, it can be difficult to locate problematic areas in the physical world. Although augmented reality can aid in addressing this concern, the need for localizing the point cloud with the environment remains.

To address these and other shortcomings of the prior art, one or more embodiments described herein provide for aligning and visualizing a point cloud using a point alignment technique and/or a movement alignment technique. For example, the point alignment technique enables a user to select virtual points in the point cloud and corresponding points in the environment, and the representation of the point cloud can then be aligned to the environment using these selected points. As another example, the movement alignment technique enables a user to manually align the representation of the point cloud to the environment using movement instructions, such as gestures.

The techniques described herein provide one or more advantages over the prior art. For example, one or more embodiments described herein improve visualizing point clouds in an augmented reality environment. One or more embodiments described herein can overlay 3D measurement data in the form of a point cloud to images/video (e.g., a video stream), where the overlay can be used as a visual indication of scan-point coverage of a scanned environment, of features/attributes of the environment (e.g., floor flatness, defect detection, etc.), and/or the like. One or more embodiments described herein can use colors to depict features/attributes of the environment, such as deviations from an expected value.

One or more embodiments described herein utilize simultaneous localization and mapping algorithms. SLAM can be used to construct or update a map of an unknown environment while simultaneously tracking an agent's (such as a robot) location within it.

One or more embodiments described herein utilize augmented reality (AR). AR provides for enhancing the real physical world by delivering digital visual elements, sound, or other sensory stimuli (an "AR element") via technology. For example, a user device (e.g., a smartphone, tablet computer, etc.) equipped with a camera and display can be used to capture an image of an environment. In some cases, this includes using the camera to capture a live, real-time representation of an environment and displaying that representation on the display. An AR element can be displayed on the display and can be associated with an object/feature of the environment. For example, an AR element with information about how to operate a particular piece of equipment can be associated with that piece of equipment and can be digitally displayed on the display of the user device when the user device's camera captures the environment and displays it on the display. As another example, a point cloud of 3D data is represented as an AR element on a real-time video stream of the environment. It is useful to know the location of the user device relative to the environment in order to accurately depict AR elements.

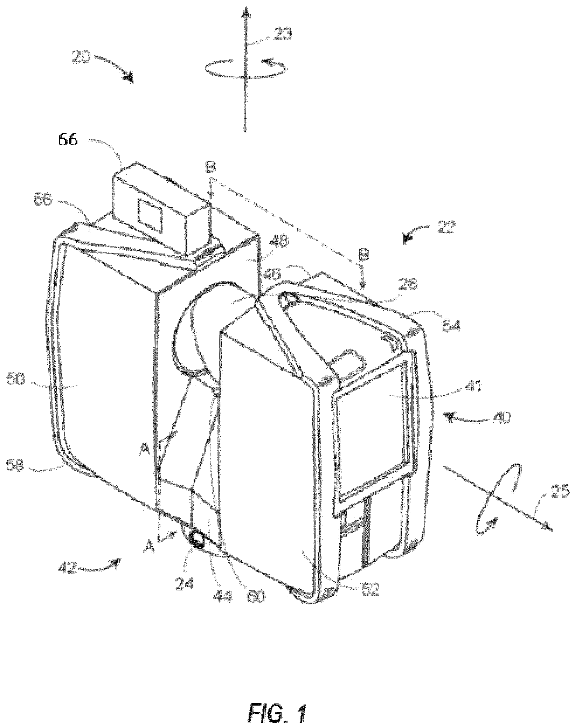

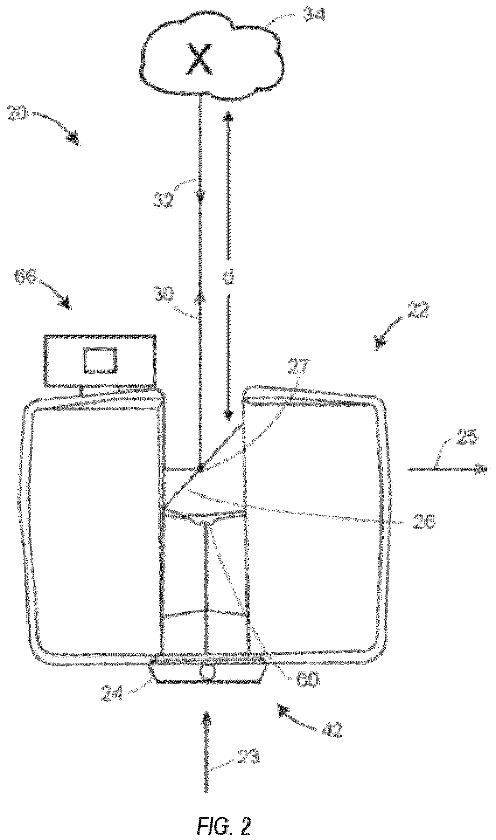

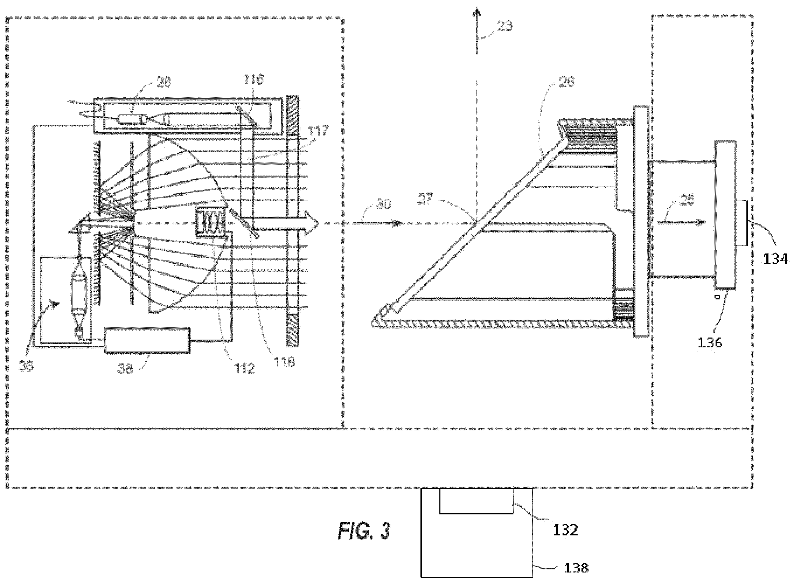

Referring now to FIGS. 1-3, a 3D coordinate measurement device, such as a laser scanner 20, is shown for optically scanning and measuring the environment surrounding the laser scanner 20 according to one or more embodiments described herein. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

Coupled to the light emitter 28 and the light receiver 36 is a controller 38. The controller 38 determines, for a multitude of measuring points X, a corresponding number of distances d between the laser scanner 20 and the points X on object 34. The distance to a particular point X is determined based at least in part on the speed of light in air through which electromagnetic radiation propagates from the device to the object point X. In one embodiment the phase shift of modulation in light emitted by the laser scanner 20 and the point X is determined and evaluated to obtain a measured distance d.

The speed of light in air depends on the properties of the air such as the air temperature, barometric pressure, relative humidity, and concentration of carbon dioxide. Such air properties influence the index of refraction n of the air. The speed of light in air is equal to the speed of light in vacuum c divided by the index of refraction. In other words, *c*ₐᵢᵣ = *c* / *n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the laser scanner 20 may also collect gray-scale information related to the received optical power (equivalent to the term "brightness.") The gray-scale value may be determined at least in part, for example, by integration of the bandpass-filtered and amplified signal in the light receiver 36 over a measuring period attributed to the object point X.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, the screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to the walls 46, 48 and cover the components of the laser scanner 20. In the exemplary embodiment, the shells 50, 52 are made from a plastic material, such as polycarbonate or polyethylene for example. The shells 50, 52 cooperate with the walls 46, 48 to form a housing for the laser scanner 20.

On an end of the shells 50, 52 opposite the walls 46, 48 a pair of yokes 54, 56 are arranged to partially cover the respective shells 50, 52. In the exemplary embodiment, the yokes 54, 56 are made from a suitably durable material, such as aluminum for example, that assists in protecting the shells 50, 52 during transport and operation. The yokes 54, 56 each includes a first arm portion 58 that is coupled, such as with a fastener for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48 and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52 and the measuring head 22 from damage during transportation and operation. In other embodiments, the yokes 54, 56 may include additional features, such as handles to facilitate the carrying of the laser scanner 20 or attachment points for accessories for example.

On top of the traverse 44, a prism 60 is provided. The prism extends parallel to the walls 46, 48. In the exemplary embodiment, the prism 60 is integrally formed as part of the carrying structure 42. In other embodiments, the prism 60 is a separate component that is coupled to the traverse 44. When the mirror 26 rotates, during each rotation the mirror 26 directs the emitted light beam 30 onto the traverse 44 and the prism 60. Due to non-linearities in the electronic components, for example in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by the controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera.

In an embodiment, a central color camera (first image acquisition device) 112 is located internally to the scanner and may have the same optical axis as the 3D scanner device. In this embodiment, the first image acquisition device 112 is integrated into the measuring head 22 and arranged to acquire images along the same optical pathway as emitted light beam 30 and reflected light beam 32. In this embodiment, the light from the light emitter 28 reflects off a fixed mirror 116 and travels to dichroic beam-splitter 118 that reflects the light 117 from the light emitter 28 onto the rotary mirror 26. In an embodiment, the mirror 26 is rotated by a motor 136 and the angular/rotational position of the mirror is measured by angular encoder 134. The dichroic beam-splitter 118 allows light to pass through at wavelengths different than the wavelength of light 117. For example, the light emitter 28 may be a near infrared laser light (for example, light at wavelengths of 780 nm or 1250 nm), with the dichroic beam-splitter 118 configured to reflect the infrared laser light while allowing visible light (e.g., wavelengths of 400 to 700 nm) to transmit through. In other embodiments, the determination of whether the light passes through the beam-splitter 118 or is reflected depends on the polarization of the light. The digital camera 112 obtains 2D images of the scanned area to capture color data to add to the scanned image. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

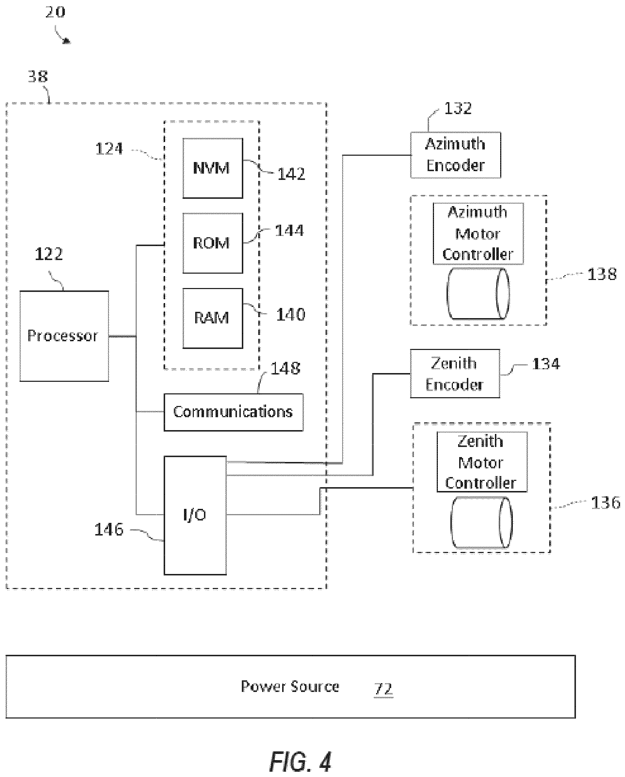

Referring now to FIG. 4 with continuing reference to FIGS. 1-3, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by panoramic camera 126, angular/rotational measurements by a first or azimuth encoder 132, and angular/rotational measurements by a second axis or zenith encoder 134.

In general, controller 38 accepts data from encoders 132, 134, light receiver 36, light source 28, and panoramic camera 126 and is given certain instructions for the purpose of generating a 3D point cloud of a scanned environment. Controller 38 provides operating signals to the light source 28, light receiver 36, panoramic camera 126, zenith motor 136 and azimuth motor 138. The controller 38 compares the operational parameters to predetermined variances and if the predetermined variance is exceeded, generates a signal that alerts an operator to a condition. The data received by the controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touch-screen display or the like. A keypad may also be coupled to the user interface for providing data input to controller 38. In one embodiment, the user interface is arranged or executed on a mobile computing device that is coupled for communication, such as via a wired or wireless communications medium (e.g. Ethernet, serial, USB, Bluetooth^{™} or WiFi) for example, to the laser scanner 20.

The controller 38 may also be coupled to external computer networks such as a local area network (LAN) and the Internet. A LAN interconnects one or more remote computers, which are configured to communicate with controller 38 using a well- known computer communications protocol such as TCP/IP (Transmission Control Protocol/Internet(^) Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods embodied in application code (e.g., program instructions executable by a processor to cause the processor to perform operations). These methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (HyperText Markup Language), Python, Ruby and any combination or derivative of at least one of the foregoing.

It should be appreciated that while embodiments herein describe the 3D coordinate measurement device as being a laser scanner, this is for example purposes and the claims should not be so limited. In other embodiments, the 3D coordinate measurement device may be another type of system that measures a plurality of points on surfaces (i.e., generates a point cloud), such as but not limited to a triangulation scanner, a structured light scanner, or a photogrammetry device for example.

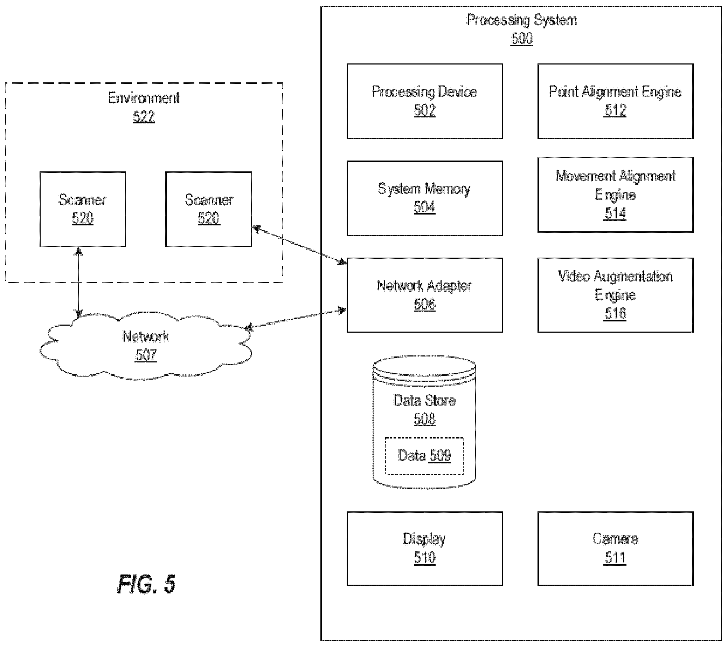

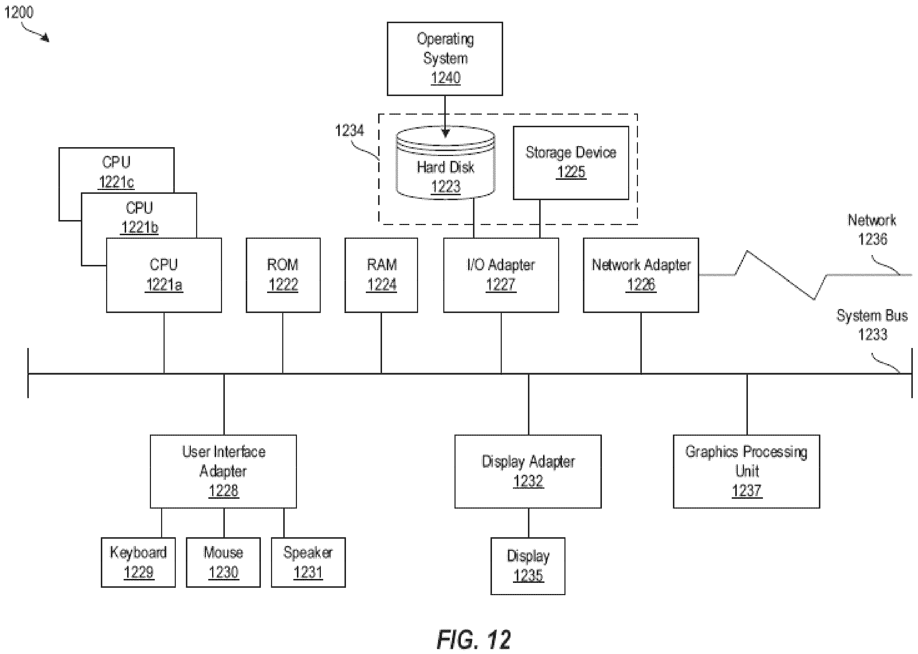

FIG. 5 is a schematic illustration of a processing system 500 for aligning and visualizing a point cloud according to one or more embodiments described herein. The processing system 500 includes a processing device 502 (e.g., one or more of the processing devices 1221 of FIG. 12), a system memory 504 (e.g., the RAM 1224 and/or the ROM 1222 of FIG. 12), a network adapter 506 (e.g., the network adapter 1226 of FIG. 12), a data store 508, a display 510, a camera 511, a point alignment engine 512, a movement alignment engine 514, and a video augmentation engine 516.

The various components, modules, engines, etc. described regarding FIG. 5 (e.g., the point alignment engine 512, the movement alignment engine 514, and the video augmentation engine 516.) can be implemented as instructions stored on a computer-readable storage medium, as hardware modules, as special-purpose hardware (e.g., application specific hardware, application specific integrated circuits (ASICs), application specific special processors (ASSPs), field programmable gate arrays (FPGAs), as embedded controllers, hardwired circuitry, etc.), or as some combination or combinations of these. According to aspects of the present disclosure, the engine(s) described herein can be a combination of hardware and programming. The programming can be processor executable instructions stored on a tangible memory, and the hardware can include the processing device 502 for executing those instructions. Thus, the system memory 504 can store program instructions that when executed by the processing device 502 implement the engines described herein. Other engines can also be utilized to include other features and functionality described in other examples herein.

The network adapter 506 enables the processing system 500 to transmit data to and/or receive data from other sources, such as scanners 520. For example, the processing system 500 receives data (e.g., a data set that includes a plurality of three-dimensional coordinates of an environment 522) from one or more of the scanners 520 directly and/or via a network 507. The data from one or more of the scanners 520 can be stored in the data store 508 of the processing system 500 as data 509, which can be used to display a point cloud on the display 510. According to one or more embodiments described herein, the camera 511 can capture images of the environment 522, which may be presented on the display 510 as a video stream of the environment 522. According to one or more embodiments described herein, the processing system can generate an augmented reality representation of the data 509 as a point cloud, which can be overlaid onto a video stream captured by the camera 511 and displayed on the display 510.

The network 507 represents any one or a combination of different types of suitable communications networks such as, for example, cable networks, public networks (e.g., the Internet), private networks, wireless networks, cellular networks, or any other suitable private and/or public networks. Further, the network 507 can have any suitable communication range associated therewith and may include, for example, global networks (e.g., the Internet), metropolitan area networks (MANs), wide area networks (WANs), local area networks (LANs), or personal area networks (PANs). In addition, the network 507 can include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof.

One or more scanners 520 (e.g., a laser scanner) can be arranged on, in, and/or around the environment 522 to scan the environment 522. It should be appreciated that while embodiments herein refer to a 3D coordinate measurement device as a laser scanner (e.g., the scanners 520), this is for example purposes and the claims should not be so limited. In other embodiments, other types of optical measurement devices may be used, such as but not limited to triangulation scanners and structured light scanners for example.

According to one or more embodiments described herein, the scanners 520 can include a scanner processing system including a scanner controller, a housing, and a three-dimensional (3D) scanner. The 3D scanner can be disposed within the housing and operably coupled to the scanner processing system. The 3D scanner includes a light source, a beam steering unit, a first angle measuring device, a second angle measuring device, and a light receiver. The beam steering unit cooperates with the light source and the light receiver to define a scan area. The light source and the light receiver are configured to cooperate with the scanner processing system to determine a first distance to a first object point based at least in part on a transmitting of a light by the light source and a receiving of a reflected light by the light receiver. The 3D scanner is further configured to cooperate with the scanner processing system to determine 3D coordinates of the first object point based at least in part on the first distance, a first angle of rotation, and a second angle of rotation.

The scanners 520 perform at least one scan to generate a data set that includes a plurality of three-dimensional coordinates of the environment 522. The data set can be transmitted, directly or indirectly (such as via a network) to a processing system, such as the processing system 500, which can store the data set as the data 509 in the data store 508. It should be appreciated that other numbers of scanners (e.g., one scanner, three scanners, four scanners, six scanners, eight scanners, etc.) can be used. According to one or more embodiments described herein, one or more scanners can be used to take multiple scans. For example, one of the scanners 520 can capture first scan data at a first location and then be moved to a second location, where the one of the scanners 520 captures second scan data.

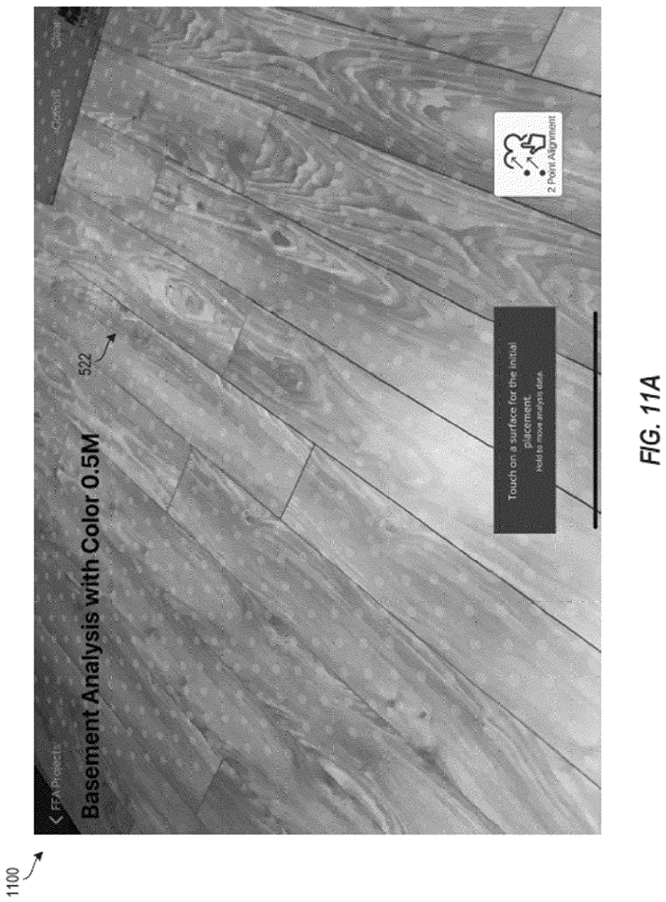

Using the data received from the scanners 520, the processing system 500 can preform alignment and visualization of a point cloud using the data 509 using one or more of the point alignment engine 512, the movement alignment engine 514, and the video augmentation engine 516. For example, the point alignment engine 512 uses points in the point cloud and corresponding points in the environment to align the point cloud to the environment. As another example, the movement alignment engine 514 provides for moving the point cloud relative to the environment to align the point cloud to the environment. The video augmentation engine 516 uses the data 509 (e.g., data received from the scanners 520, for example) to generate an augmented reality representation of the data 509 as a point cloud, which can be overlaid onto a video stream captured by the camera 511. AR representations are further described herein, such as with reference to FIGS. 11A-11J. The features and functionality of the point alignment engine 512, the movement alignment engine 514, and the video augmentation engine 516 are now described in more detail with reference to the following figures.

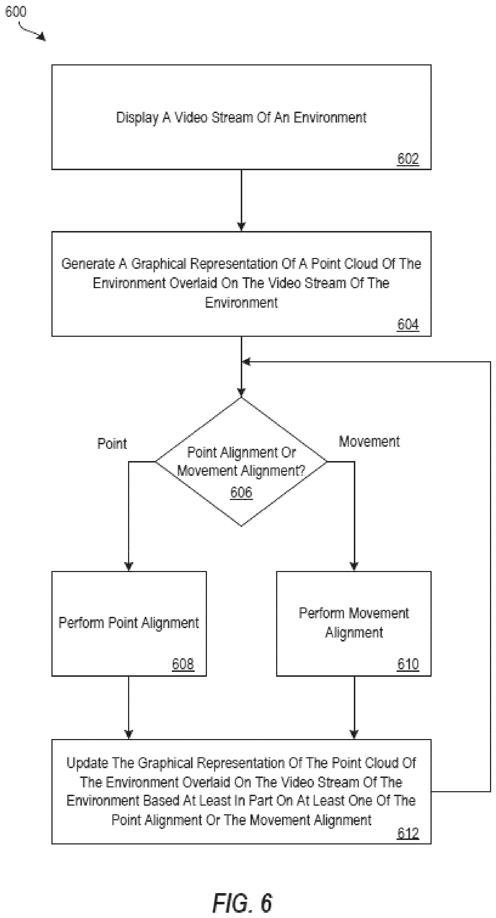

Turning now to FIG. 6, a flow diagram of a method 600 for aligning and visualizing a point cloud is provided according to one or more embodiments described herein. The method 600 can be performed by any suitable system or device, such as the processing system 500 of FIG. 5 and/or the processing system 1200 of FIG. 12. The method 600 is now described with further reference to FIGS. 11A-11J. Particularly, FIGS. 11A-11J depict screenshots 1100-1109 of a video stream of an environment (e.g., the environment 522) according to one or more embodiments described herein.

At block 602, the processing system 500 displays on the display 510 a video stream of an environment (e.g., the environment 522). For example, FIG. 11A shows a screenshot 1100 of a video stream of the environment 522.

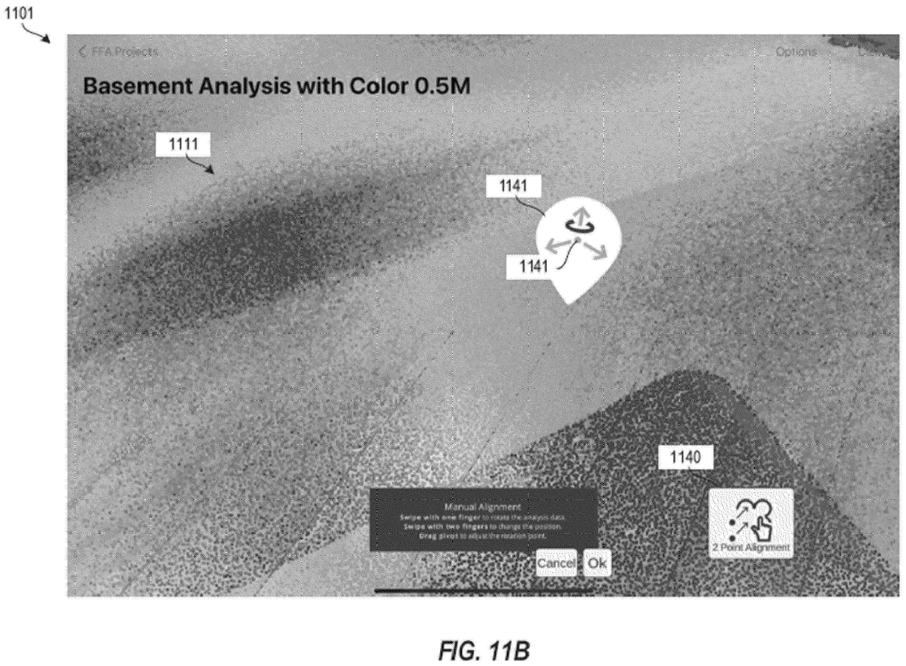

At block 604, the processing system 500, such as using the video augmentation engine 516, generates a graphical representation of a point cloud of an environment overlaid on a video stream of the environment. FIG. 11B depicts an example of a graphical representation of a point cloud 1111 according to one or more embodiments described herein. As shown on the screenshot 1101, a point cloud 1111 is overlaid on the video stream as a graphical representation. The screenshot 1101 also includes a point alignment selection 1140 for performing point alignment and a movement alignment selection 1141 for performing movement alignment. This enables the user to select performing point alignment and/or movement alignment.

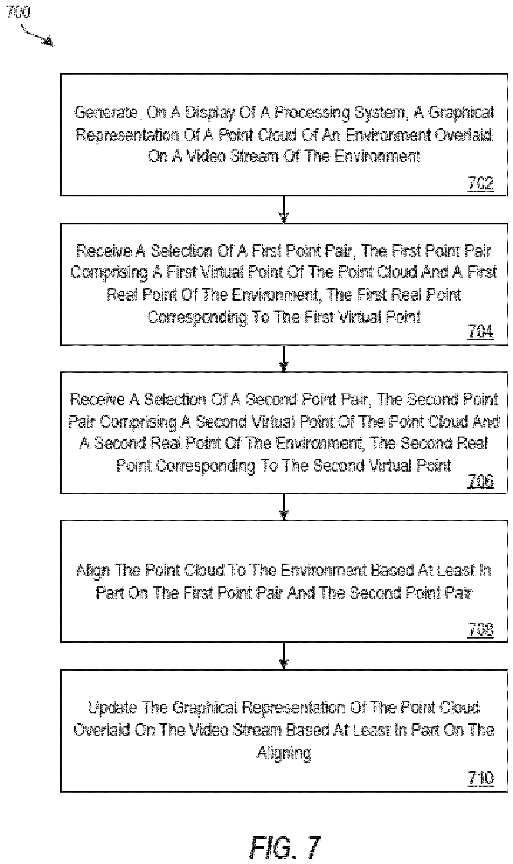

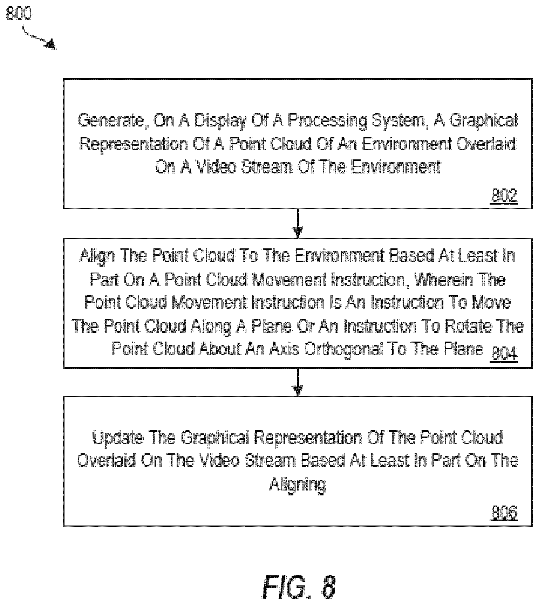

It is then determined at decision block 606 whether point alignment or movement alignment was selected. Responsive to point alignment being selected, the method 600 proceeds to perform, at block 608 point alignment using the point alignment engine 512 (see, e.g., the method 700 of FIG. 7). Responsive to movement alignment being selected, the method 600 proceeds to perform, at block 610 movement alignment using the point alignment engine 512 (see, e.g., the method 800 of FIG. 8).

The method 600 then proceeds to block 612, where the graphical representation of the point cloud overlaid on the video stream is updated based at least in part on the point alignment and/or the movement alignment.

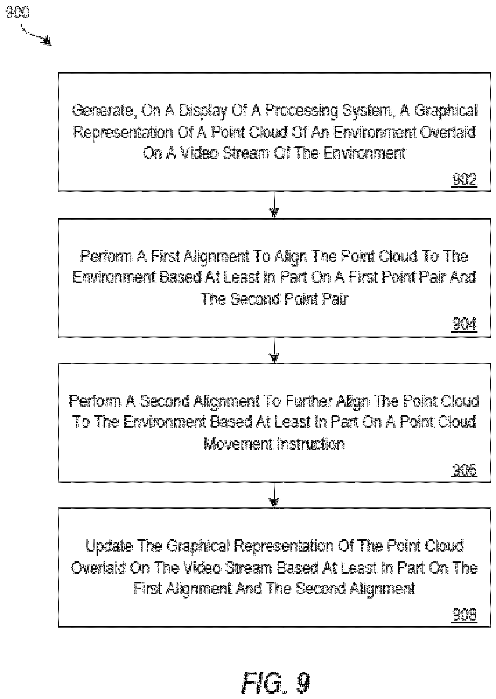

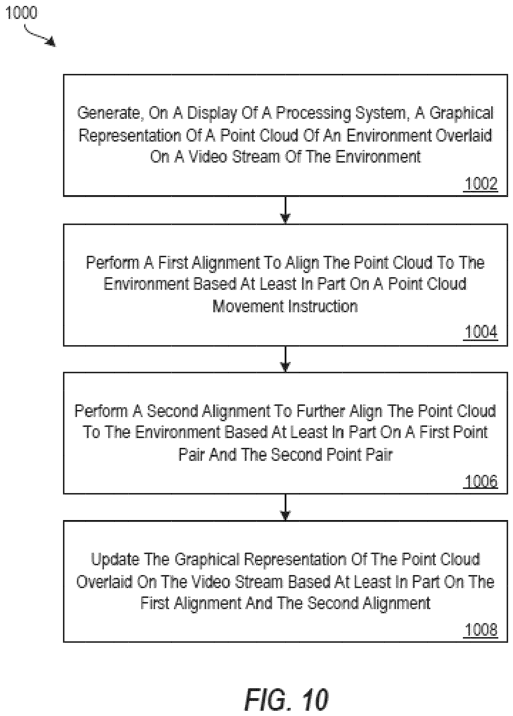

According to one or more embodiments described herein, the method 600 can repeat such that point alignment and movement alignment can both be performed and/or such that point alignment and/or movement alignment be performed multiple times. For example, FIGS. 9 and 10 depict methods 900 and 1000 respectively for performing both point alignment and movement alignment.

Additional processes also may be included, and it should be understood that the process depicted in FIG. 6 represents an illustration, and that other processes may be added or existing processes may be removed, modified, or rearranged without departing from the scope of the present disclosure.

FIG. 7 is a flow diagram of a method 700 for aligning and visualizing a point cloud according to one or more embodiments described herein. The method 700 can be performed by any suitable system or device, such as the processing system 500 of FIG. 5 and/or the processing system 1200 of FIG. 12. The method 600 is now described with further reference to FIGS. 11A-11J.

At block 702, the processing system 500, such as using the video augmentation engine 516, generates a graphical representation of a point cloud of an environment overlaid on a video stream of the environment. FIG. 11B depicts an example of a graphical representation of a point cloud 1111 according to one or more embodiments described herein.

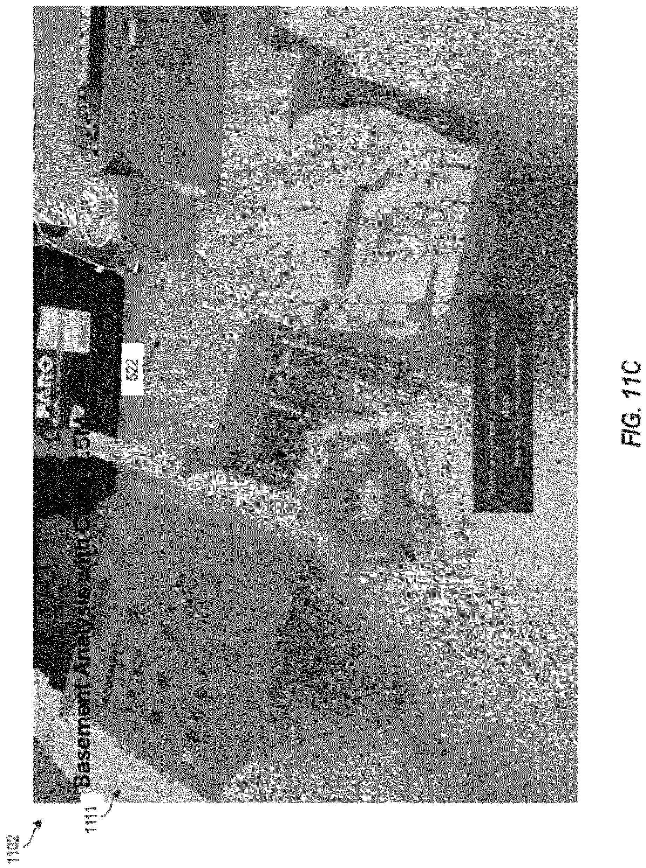

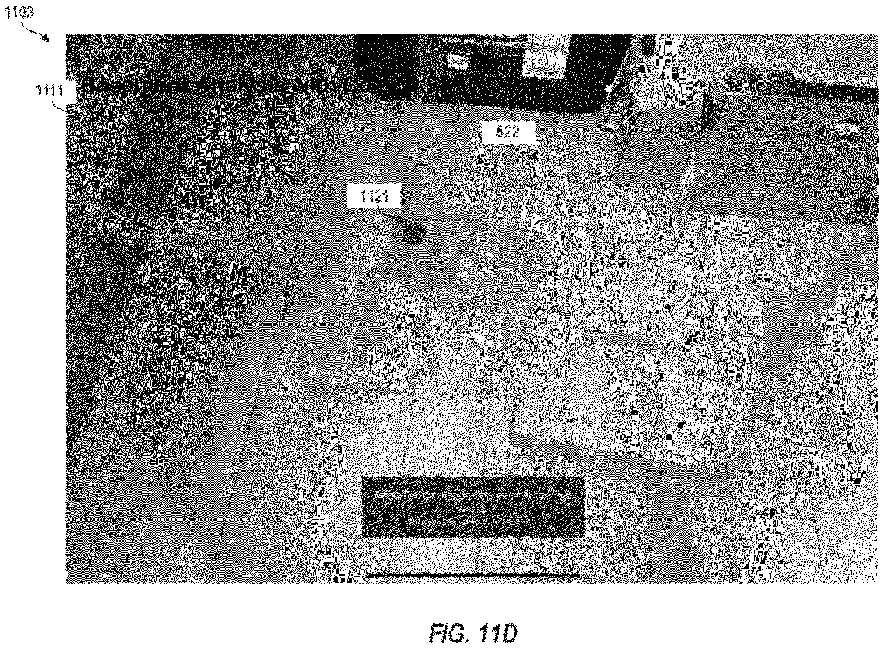

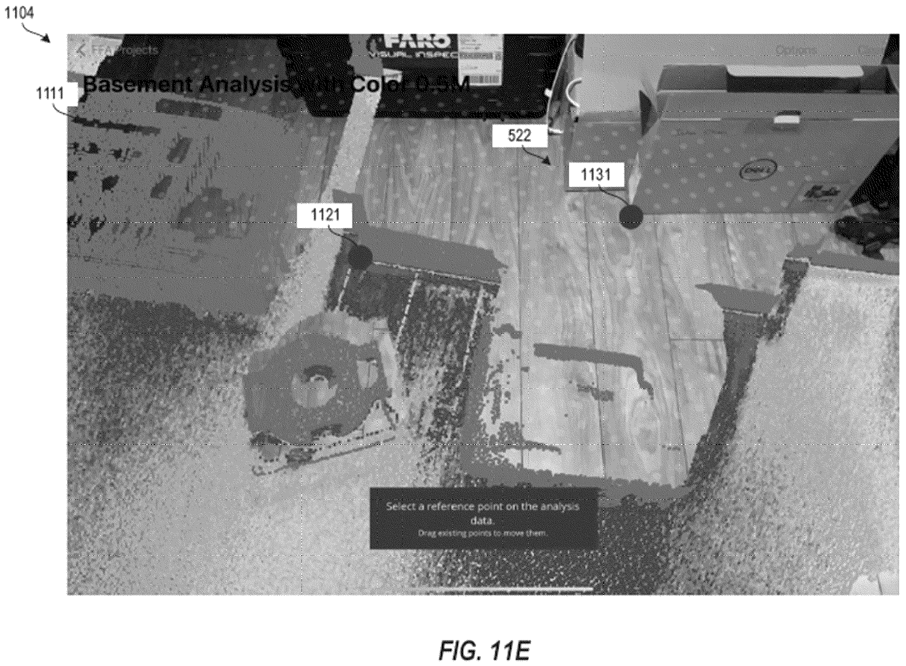

With continued reference to FIG. 7, at block 704, the processing system 500 receives a selection of a first point pair from a user. The first point pair includes a first virtual point of the point cloud and a first real point of the environment, where the first real point corresponds to the first virtual point. For example, a user selects (e.g., using an input device of the processing system 500, such as the display 510, which may be configured a touch screen display) a virtual point of the point cloud and similarly selects a corresponding point from the environment. It should be appreciated that the "real point" is a location (e.g., a pixel location) on the image being displayed on the display 510 that corresponds to a location in the environment. For example, the real point could be a corner of a room, a point along an edge of two planes meeting (e.g., a surface of a box meeting a surface of a floor upon which the box is resting), and/or the like. The selected points may be features easily identifiable within the environment 522 (e.g., physical space) to the user, such as a corner of a table, an edge where a wall meets a floor or another wall, an object within the environment 522, and/or the like, including multiples and/or combinations thereof. As an example, on the screen 1102 of FIG. 11C, the user selects a virtual point 1121 of the point cloud 1111. The virtual point 1121 is shown in FIG. 11D. Then, the user selects a real point 1131 of the environment 522 that corresponds to the virtual point 1121. The real point 1131 is shown in FIG. 11E. Together, the virtual point 1121 and the real point 1131 make up a point pair (e.g., a first point pair).

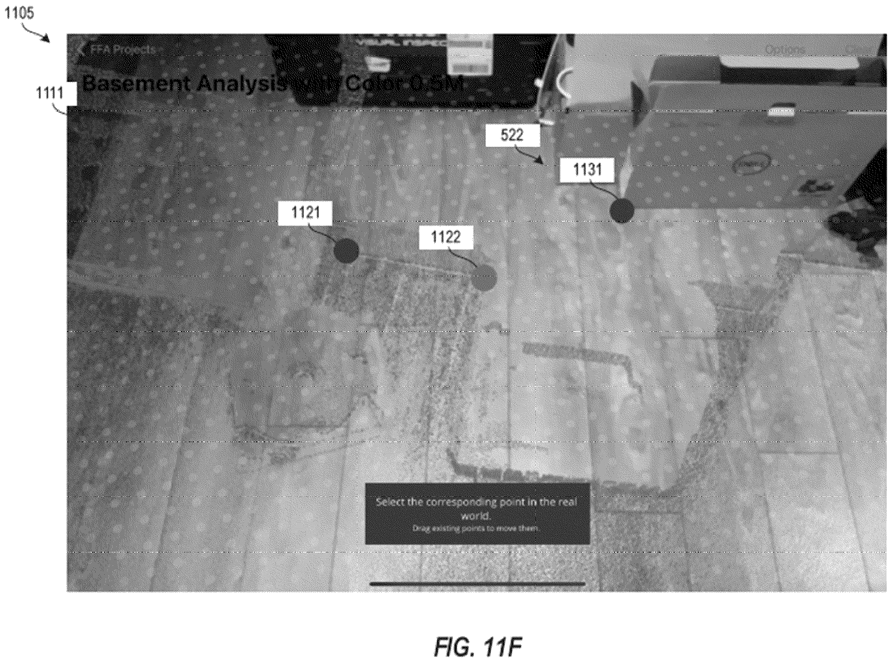

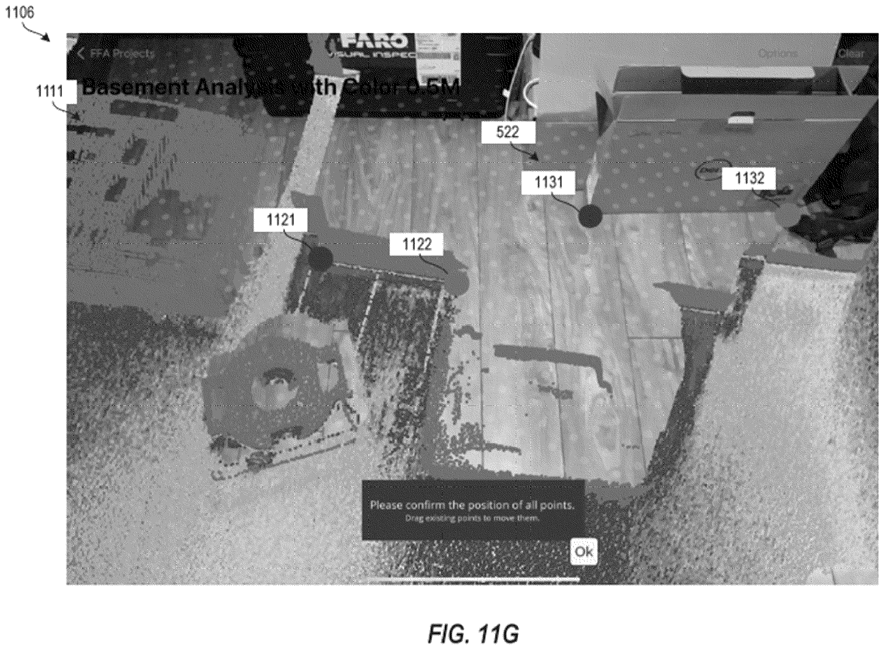

With continued reference to FIG. 7, at block 706, the processing system 500 receives a selection of a second point pair. The second point pair includes a second virtual point of the point cloud and a second real point of the environment, where the second real point corresponds to the second virtual point. As in block 704, the user selects a virtual point of the point cloud and similarly selects a corresponding point from the environment. As an example, on the screen 1105 of FIG. 11F, the user selects a virtual point 1122 of the point cloud 1111. Then, as shown in FIG. 11G, the user selects a real point 1132 of the environment 522 that corresponds to the virtual point 1122. Together, the virtual point 1122 and the real point 1132 make up a point pair (e.g., a second point pair).

With continued reference to FIG. 7, at block 708, aligning the point cloud to the environment based at least in part on the first point pair and the second point pair. According to one or more embodiments described herein, the alignment can be based on distances between points of the point pairs. For example, the processing system 500 can determine a first distance (e.g., a Euclidean distance) between the first virtual point and the first real point and determine a second distance between the second virtual point and the second real point. The point cloud can then be "moved" or adjusted relative to video stream of the environment 522 to minimize one or both of the first distance or the second distance. According to one or more embodiments described herein, the point cloud represents points on a floor, so movement and/or rotation of the point cloud occurs on a plane defined by the floor. In such examples, only two points are required for alignment because the movement is planar. In some examples, the alignment can be based on an average of the first distance and a second distance, such that the point cloud is aligned to minimize the average distance. According to one or more embodiments described herein, more than two point pairs can be implemented, and the alignment can be based on distances for each of the point pairs.

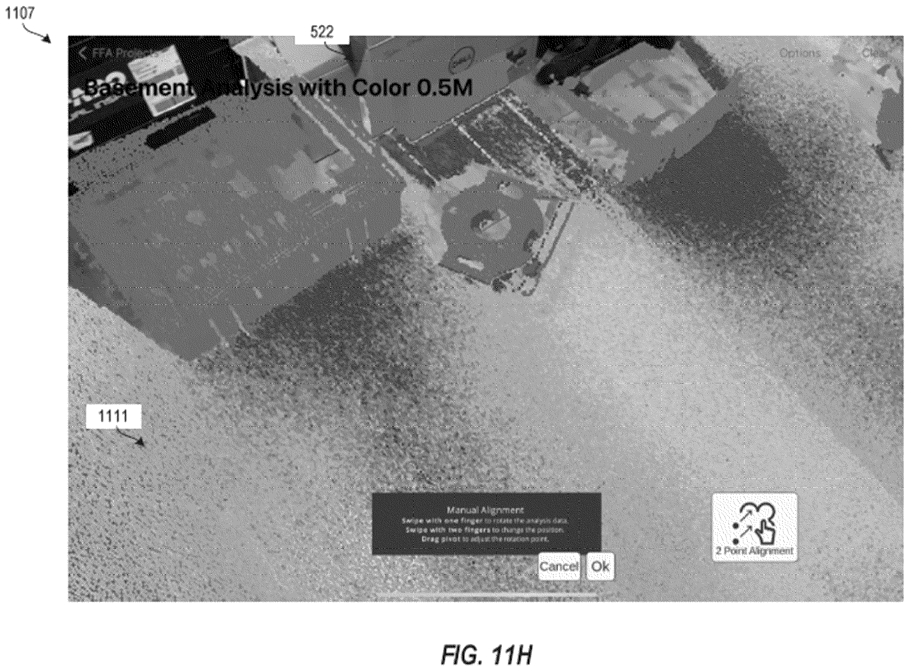

At block 710, the processing system 500 updates the graphical representation of the point cloud overlaid on the video stream based at least in part on the aligning. For example, as shown in FIG. 11H, the point cloud 1111 is moved or aligned relative to the environment 522 so that the graphical representation of the point cloud is overlaid on the video stream of the environment at a more correct location.

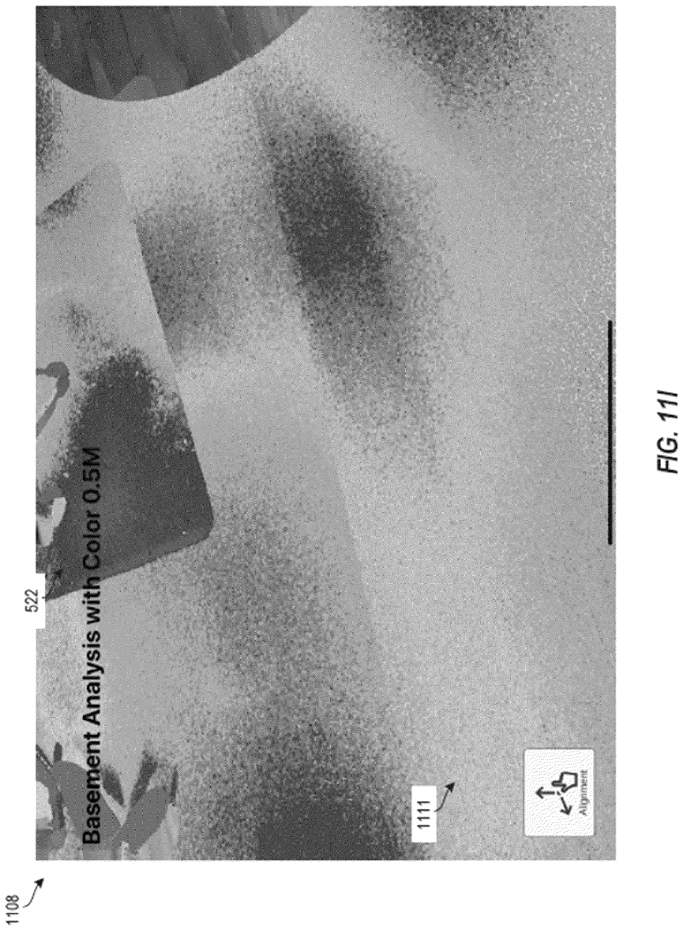

Additional processes also may be included. According to one or more embodiments described herein, the movement of the processing system 500 can be tracked (e.g., using SLAM as described herein) as it moves relative to the environment 522. The graphical representation of the point cloud can be updated in real-time (or near-real-time) based on the movement of the processing system while maintaining alignment between the point cloud and the environment. This is shown in the example of FIG. 11I, where the point cloud 1111 remains aligned with the environment 522 even though the processing system 500 has moved relative to the environment 522.

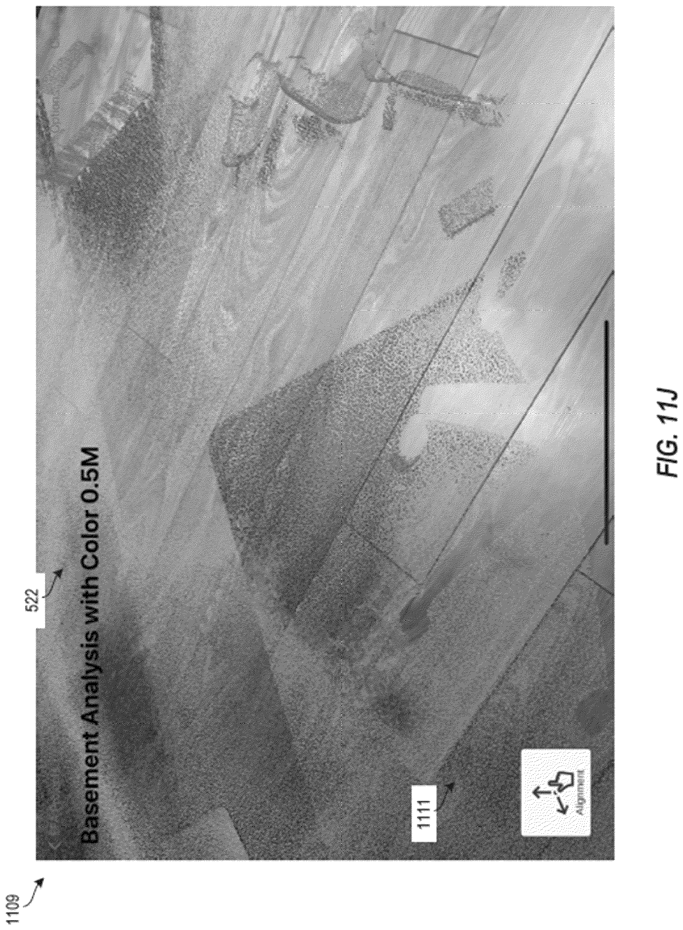

According to one or more embodiments described herein, one or more properties of the graphical representation of the point cloud overlaid on the video stream can be adjusted. For example, a size of points of the point cloud can be increased or decreased, a transparency of the point cloud can be increased or decreased, and/or the like, including combinations thereof. This is shown in the example of FIG. 11J, where the transparency and point size of the point cloud has been adjusted.

It should be understood that the process depicted in FIG. 7 represents an illustration, and that other processes may be added or existing processes may be removed, modified, or rearranged without departing from the scope of the present disclosure.

FIG. 8 is a flow diagram of a method 800 for aligning and visualizing a point cloud according to one or more embodiments described herein. The method 800 can be performed by any suitable system or device, such as the processing system 500 of FIG. 5 and/or the processing system 1200 of FIG. 12.

At block 802, the processing system 500, such as using the video augmentation engine 516, generates a graphical representation of a point cloud of an environment overlaid on a video stream of the environment. FIG. 11B depicts an example of a graphical representation of a point cloud 1111 according to one or more embodiments described herein.

At block 804, the processing system 500, using the movement alignment engine 514, aligns the point cloud to the environment based at least in part on a point cloud movement instruction. The point cloud movement instruction is an instruction to move the point cloud along a plane or an instruction to rotate the point cloud about an axis orthogonal to the plane. For example, with reference to FIG. 11B, as shown on the screenshot 1101, a point cloud 1111 is overlaid on the video stream as a graphical representation. The screenshot 1101 also includes a point alignment selection 1140 for performing point alignment and a movement alignment selection 1141 for performing movement alignment. This enables the user to select performing point alignment and/or movement alignment. Responsive to the user selecting the movement alignment selection 1141, movement alignment begins. The movement alignment selection 1141 defines a point 1142 for performing the movement alignment. The point 1142 defines a point of movement for moving the point cloud relative to the environment. The user can manipulate the point cloud relative to the environment by providing a movement instruction, which may be an input from a device, such as a touchscreen, mouse, stylus, etc. In some cases, the user can use a gesture, such as a two finger gesture on the display to move the point cloud along a plane, a one finger gesture to rotate the point cloud about the point on the plane. In the case of moving the point cloud along a plane, the point 1142 can define a plane, such as a plane substantially horizontal to a surface of the environment 522 (e.g., a floor, a ceiling, a wall, and/or some other suitable surface). The user can then move the point cloud along the plane. The user can also rotate the point cloud about the point 1142. Thus, the point 1142 defines a plane and an axis orthogonal to the plane for performing movement alignment. According to one or more embodiments described herein, the user can move the location of the point 1142 such that the center of rotation is moved.

At block 806, processing system 500 updates the graphical representation of the point cloud overlaid on the video stream based at least in part on the aligning.

Additional processes also may be included, and it should be understood that the process depicted in FIG. 8 represents an illustration, and that other processes may be added or existing processes may be removed, modified, or rearranged without departing from the scope of the present disclosure.

FIG. 9 is a flow diagram of a method 900 for aligning and visualizing a point cloud according to one or more embodiments described herein. The method 900 can be performed by any suitable system or device, such as the processing system 500 of FIG. 5 and/or the processing system 1200 of FIG. 12.

At block 902, the processing system 500, using the video augmentation engine 516, generates, on the display 510, a graphical representation of a point cloud of an environment overlaid on a video stream of the environment. At block 904, the processing system 500, using the point alignment engine 512, performs a first alignment to align the point cloud to the environment based at least in part on a first point pair and the second point pair. At block 906, the processing system 500, using the movement alignment engine 514, performs a second alignment to further align the point cloud to the environment based at least in part on a point cloud movement instruction. At block 908, the processing system 500, using the video augmentation engine 516, updates the graphical representation of the point cloud overlaid on the video stream based at least in part on the first alignment and the second alignment.

According to one or more embodiments described herein, the point cloud movement instruction is an instruction to move the point cloud along a plane or an instruction to rotate the point cloud about an axis orthogonal to the plane. According to one or more embodiments described herein, the first point pair includes a first virtual point of the point cloud and a first real point of the environment, the first real point corresponding to the first virtual point. According to one or more embodiments described herein, the second point pair includes a second virtual point of the point cloud and a second real point of the environment, the second real point corresponding to the second virtual point.

Additional processes also may be included, and it should be understood that the process depicted in FIG. 9 represents an illustration, and that other processes may be added or existing processes may be removed, modified, or rearranged without departing from the scope of the present disclosure.

FIG. 10 is a flow diagram of a method 1000 for aligning and visualizing a point cloud according to one or more embodiments described herein. The method 700 can be performed by any suitable system or device, such as the processing system 500 of FIG. 5 and/or the processing system 1200 of FIG. 12.

At block 1002, the processing system 500, using the video augmentation engine 516, generates, on the display 510, a graphical representation of a point cloud of an environment overlaid on a video stream of the environment. At block 1004, the processing system 500, using the movement alignment engine 514, performs a first alignment to align the point cloud to the environment based at least in part on a point cloud movement instruction. At block 1006, the processing system 500, using the point alignment engine 512, performs a second alignment to further align the point cloud to the environment based at least in part on a first point pair and the second point pair. At block 1008, the processing system 500, using the video augmentation engine 516, updates the graphical representation of the point cloud overlaid on the video stream based at least in part on the first alignment and the second alignment.

According to one or more embodiments described herein, the point cloud movement instruction is an instruction to move the point cloud along a plane or an instruction to rotate the point cloud about an axis orthogonal to the plane. According to one or more embodiments described herein, the first point pair includes a first virtual point of the point cloud and a first real point of the environment, the first real point corresponding to the first virtual point. According to one or more embodiments described herein, the second point pair includes a second virtual point of the point cloud and a second real point of the environment, the second real point corresponding to the second virtual point.

Additional processes also may be included, and it should be understood that the process depicted in FIG. 10 represents an illustration, and that other processes may be added or existing processes may be removed, modified, or rearranged without departing from the scope of the present disclosure.

It is understood that one or more embodiments described herein is capable of being implemented in conjunction with any other type of computing environment now known or later developed. For example, FIG. 12 depicts a block diagram of a processing system 1200 for implementing the techniques described herein. In accordance with one or more embodiments described herein, the processing system 1200 is an example of a cloud computing node of a cloud computing environment. In examples, processing system 1200 has one or more central processing units ("processors" or "processing resources" or "processing devices") 1221a, 1221b, 1221c, etc. (collectively or generically referred to as processor(s) 1221 and/or as processing device(s)). In aspects of the present disclosure, each processor 1221 can include a reduced instruction set computer (RISC) microprocessor. Processors 1221 are coupled to system memory (e.g., random access memory (RAM) 1224) and various other components via a system bus 1233. Read only memory (ROM) 1222 is coupled to system bus 1233 and may include a basic input/output system (BIOS), which controls certain basic functions of processing system 1200.

Further depicted are an input/output (I/O) adapter 1227 and a network adapter 1226 coupled to system bus 1233. I/O adapter 1227 may be a small computer system interface (SCSI) adapter that communicates with a hard disk 1223 and/or a storage device 1225 or any other similar component. I/O adapter 1227, hard disk 1223, and storage device 1225 are collectively referred to herein as mass storage 1234. Operating system 1240 for execution on processing system 1200 may be stored in mass storage 1234. The network adapter 1226 interconnects system bus 1233 with an outside network 1236 enabling processing system 1200 to communicate with other such systems.

A display (e.g., a display monitor) 1235 is connected to system bus 1233 by display adapter 1232, which may include a graphics adapter to improve the performance of graphics intensive applications and a video controller. In one aspect of the present disclosure, adapters 1226, 1227, and/or 1232 may be connected to one or more I/O busses that are connected to system bus 1233 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 1233 via user interface adapter 1228 and display adapter 1232. A keyboard 1229, mouse 1230, and speaker 1231 may be interconnected to system bus 1233 via user interface adapter 1228, which may include, for example, a Super I/O chip integrating multiple device adapters into a single integrated circuit.

In some aspects of the present disclosure, processing system 1200 includes a graphics processing unit 1237. Graphics processing unit 1237 is a specialized electronic circuit designed to manipulate and alter memory to accelerate the creation of images in a frame buffer intended for output to a display. In general, graphics processing unit 1237 is very efficient at manipulating computer graphics and image processing, and has a highly parallel structure that makes it more effective than general-purpose CPUs for algorithms where processing of large blocks of data is done in parallel.

Thus, as configured herein, processing system 1200 includes processing capability in the form of processors 1221, storage capability including system memory (e.g., RAM 1224), and mass storage 1234, input means such as keyboard 1229 and mouse 1230, and output capability including speaker 1231 and display 1235. In some aspects of the present disclosure, a portion of system memory (e.g., RAM 1224) and mass storage 1234 collectively store the operating system 1240 to coordinate the functions of the various components shown in processing system 1200.

It will be appreciated that one or more embodiments described herein may be embodied as a system, method, or computer program product and may take the form of a hardware embodiment, a software embodiment (including firmware, resident software, micro-code, etc.), or a combination thereof. Furthermore, one or more embodiments described herein may take the form of a computer program product embodied in one or more computer readable medium(s) having computer readable program code embodied thereon.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method for point cloud alignment, the method comprising:
generating, on a display of a processing system, a graphical representation of a point cloud of an environment overlaid on a video stream of the environment;
receiving a first selection of a first point pair, the first point pair comprising a first virtual point of the point cloud and a first real point of the environment, the first real point corresponding to the first virtual point;
receiving a second selection of a second point pair, the second point pair comprising a second virtual point of the point cloud and a second real point of the environment, the second real point corresponding to the second virtual point;
aligning the point cloud to the environment based at least in part on the first point pair and the second point pair; and
updating the graphical representation of the point cloud overlaid on the video stream based at least in part on the aligning.

2. The method of claim 1, wherein the point cloud is based on data captured by a three-dimensional (3D) coordinate measurement device.

3. The method of claim 1, wherein the 3D coordinate measurement device is a laser scanner.

4. The method of claim 1, further comprising:
tracking a movement of the processing system as the processing system moves relative to the environment; and
further updating the graphical representation based at least in part on the movement of the processing system.

5. The method of claim 1, further comprising adjusting a property of the graphical representation of the point cloud overlaid on the video stream.

6. The method of claim 5, wherein the property comprises at least one of a point size of points of the point cloud or a transparency of the point cloud.

7. The method of claim 1, wherein the aligning is based at least in part on a distance between the first virtual point and the first real point.

8. The method of claim 1, wherein the aligning is based at least in part on a distance between the second virtual point and the second real point.

9. The method of claim 1, wherein the aligning is based at least in part on a first distance between the first virtual point and the first real point and based at least in part on a second distance between the second virtual point and the second real point.

10. The method of claim 9, wherein the first distance is a first Euclidean distance, and wherein the second distance is a second Euclidean distance.

11. The method of claim 9, wherein the aligning is based at least in part on an average of the first distance and the second distance.

12. The method of claim 1, further comprising:
receiving a third selection of a third point pair, the third point pair comprising a third virtual point of the point cloud and a third real point of the environment, the third real point corresponding to the third virtual point, and
wherein the aligning is based at least in part on the first point pair, the second point pair, and the third point pair.

13. A method for point cloud alignment, the method comprising:
generating, on a display of a processing system, a graphical representation of a point cloud of an environment overlaid on a video stream of the environment;
aligning the point cloud to the environment based at least in part on a point cloud movement instruction, wherein the point cloud movement instruction is an instruction to move the point cloud along a plane or an instruction to rotate the point cloud about an axis orthogonal to the plane; and
updating the graphical representation of the point cloud overlaid on the video stream based at least in part on the aligning.

14. The method of claim 13, wherein the point cloud movement instruction is a gesture.

15. The method of claim 13, wherein the point cloud movement instruction is a touch input on the display of the processing system.
